(19)

**Europäisches Patentamt**
**European Patent Office**
**Office européen des brevets**

(11)  **EP 3 218 890 B1**

(12)  **EUROPEAN PATENT SPECIFICATION**

(45) Date of publication and mention
of the grant of the patent:
**10.01.2024   Bulletin 2024/02**

(21) Application number: **15858182.7**

(22) Date of filing: **16.10.2015**

(51) International Patent Classification (IPC):
**G06N 3/0464** *(2023.01)*      **G06N 3/045** *(2023.01)*
**G06N 3/084** *(2023.01)*

(52) Cooperative Patent Classification (CPC):
**G06N 3/084; G06N 3/045; G06N 3/0464**

(86) International application number:
**PCT/US2015/055943**

(87) International publication number:
**WO 2016/077027 (19.05.2016 Gazette 2016/20)**

(54) **HYPER-CLASS AUGMENTED AND REGULARIZED DEEP LEARNING FOR FINE-GRAINED IMAGE CLASSIFICATION**

HYPERKLASSENERWEITERTES UND GEREGELTES TIEFENLERNEN FÜR FEINKÖRNIGE BILDKLASSIFIZIERUNG

APPRENTISSAGE PROFOND AUGMENTÉ ET RÉGULARISÉ D'HYPER-CLASSE POUR CLASSIFICATION D'IMAGES À GRAIN FIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2014   US 201462079316 P**
**15.10.2015   US 201514884600**

(43) Date of publication of application:
**20.09.2017   Bulletin 2017/38**

(73) Proprietor: **NEC Corporation**
**Tokyo 108-8001, (JP)**

(72) Inventors:
• **YANG, Tianbao**
  **San Jose, California 95129 (US)**
• **WANG, Xiaoyu**
  **Sunnyvale, California 94087 (US)**
• **LIN, Yuanqing**
  **Sunnyvale, California 94087 (US)**
• **XIE, Saining**
  **Princeton, New Jersey 08540 (US)**

(74) Representative: **Betten & Resch**
**Patent- und Rechtsanwälte PartGmbB**
**Maximiliansplatz 14**
**80333 München (DE)**

(56) References cited:
**US-A1- 2011 222 724**

• **Piotr Teterwak ET AL: "Shared Roots: Regularizing Neural Networks through Multitask Learning", , 29 August 2014 (2014-08-29), XP55484347, Retrieved from the Internet: URL:https://www.cs.dartmouth.edu/~trdata/r eports/TR2014-762.pdf [retrieved on 2018-06-14]**
• **LI SIJIN ET AL: "Heterogeneous Multi-task Learning for Human Pose Estimation with Deep Convolutional Neural Network", 2014 IEEE CONFERENCE ON COMPUTER VISION AND PATTERN RECOGNITION WORKSHOPS, IEEE, 23 June 2014 (2014-06-23), pages 488-495, XP032649680, DOI: 10.1109/CVPRW.2014.78 [retrieved on 2014-09-24]**
• **XIE SAINING ET AL: "Hyper-class augmented and regularized deep learning for fine-grained image classification", 2015 IEEE CONFERENCE ON COMPUTER VISION AND PATTERN RECOGNITION (CVPR), IEEE, 7 June 2015 (2015-06-07), pages 2645-2654, XP032793710, DOI: 10.1109/CVPR.2015.7298880 [retrieved on 2015-10-14]**

**(Cont. next page)**

EP 3 218 890 B1

- Nitish Srivastava ET AL: "Discriminative Transfer Learning with Tree-based Priors", , 31 December 2013 (2013-12-31), XP055459857, Retrieved from the Internet: URL:https://papers.nips.cc/paper/5029-discriminative-transfer-learning-with-tree-based-priors.pdf [retrieved on 2018-03-15]
- ZHANG ET AL.: 'Part-based R-CNNs for fine-grained category detection' 2014 EUROPEAN CONFERENCE ON COMPUTER VISION (ECCV 06 September 2014, ZURICH, pages 834 - 849, XP055433626
- CIRESAN ET AL.: 'Multi-column deep neural networks for image classification' 2012 IEEE CONFERENCE ON COMPUTER VISION AND PATTERN RECOGNITION (CVPR 2012, pages 3642 - 3649, XP032232509
- KRIZHEVSKY ET AL.: 'ImageNet classification with deep convolutional neural networks' 2012 NEURAL INFORMATION PROCESSING SYSTEMS (NIPS) CONFERENCE 03 December 2012, CALIFORNIA, pages 1 - 9, XP055113686
- GAVVES ET AL.: 'Fine-grained categorization by alignments' 2013 ICCV : IEEE INTERNATIONAL CONFERENCE ON COMPUTER VISION 01 December 2013, SYDNEY, pages 1713 - 1720, XP032572853
- XIE ET AL.: 'Hyper-class augmented and regularized deep learning for fine-grained image classification' 2015 CVPR (COMPUTER VISION AND PATTERN RECOGNITION) CONFERENCE 09 June 2015, BOSTON, pages 2645 - 2654, XP032793710

**Description**

BACKGROUND

The application relates to Hyper-class Augmented and Regularized Deep Learning for Fine-grained Image Classification.

Piotr Teterwak ET AL: "Shared Roots: Regularizing Neural Networks through Multitask Learning",, 29 August 2014 (2014-08-29) describes regularizing neural networks using multi-task learning and specifically by learning an auxiliary task formed by agglomerating classes into super-classes. LI SIJIN ET AL: "Heterogeneous Multi-task Learning for Human Pose Estimation with Deep Convolutional Neural Network",2014 IEEE CONFERENCE ON COMPUTER VISION AND PATTERN RECOGNITION WORKSHOPS, IEEE, 23 June 2014 (2014-06-23), pages 488-495 describes a heterogeneous multi-task learning framework for human pose estimation from monocular image with deep convolutional neural network. The body-part detection task helps to regularize the network.

Although deep convolutional neural network (CNN) has seen tremendous success in large-scale generic object recognition, it has yet been very successful in fine-grained image classification (FGIC). In comparison with generic object recogntion, FGIC is challenging because (i) a large number of fine-grained labeled data is expensive to acquire (usually requiring domain expertise); (ii) large intra-class variance and small inter-class variance. Conventional systems that use deep CNN for image recognition with small training data adopts a simple strategy that includes: pre-training a deep CNN on a large-scale external dataset (e.g., ImageNet) and fine-tuning it on the small-scale target data to fit the specific classification task. However, the features learned from a generic data set might not be well suited for a specific FGIC task, consequentially limiting the performance.

SUMMARY

The invention is defined by the appended claims.

Embodiments of the invention are defined in the dependent claims

The system provides multi-task deep learning, allowing the two tasks (fine-grained classification and hyper-class classification) to share and learn the same feature layers. The regularization technique in the multi-task deep learning exploits the relationship between the fine-grained classes and the hyper-classes, which provides explicit guidance on the learning process at the classifier level. When exploiting factor-classes that explains the intra-class variance, our learning model engine is able to mitigate the issue of large intra-class variance and improve the generalization performance.

BRIEF DESCRIPTION OF THE DRAWINGS

FIGS. 1A and 1B show an image classifier with a systematic framework for learning a deep CNN.

FIG. 2A-2B shows two types of relationships between hyper-classes and fine-grained classes.

FIG. 3 shows an autonomous driving system with the image classifier of FIGS. 1A-1B.

DESCRIPTION

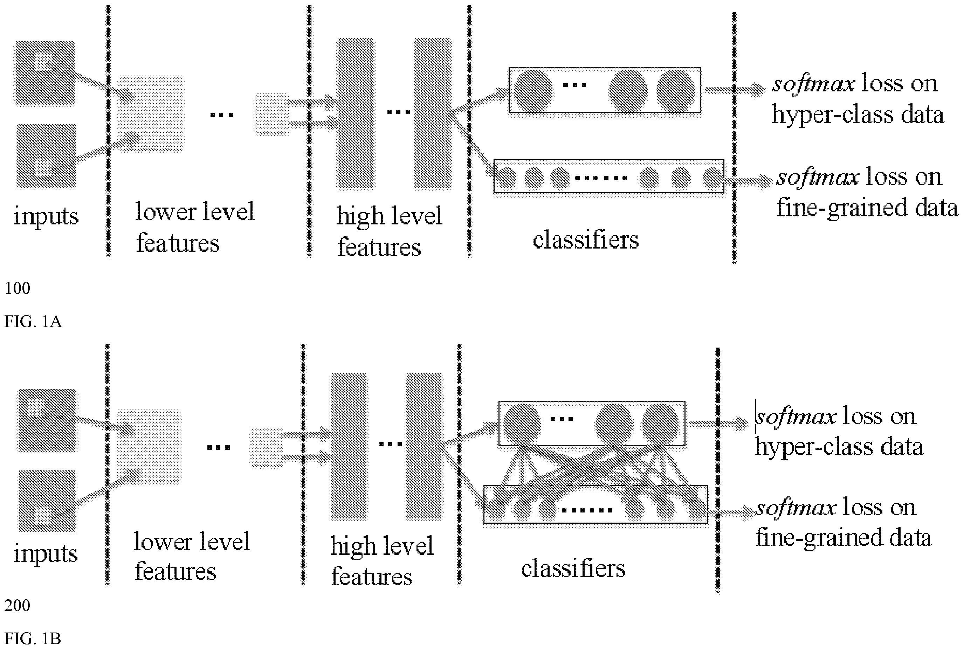

FIGS. 1A and 1B show an image classifier with a systematic framework for learning a deep CNN. The system addresses classification challenges from two new perspectives: (i) identifying easily annotated hyper-classes inherent in the fine-grained data and acquiring a large number of hyper-classes labeled images from readily available external sources (e.g., image search engines), and formulating the problem into multi-task learning, (ii) a learning model engine by exploiting a regularization between the fine-grained recognition model engine and the hyper-class recognition model engine.

FIGS. 1A-1B illustrate two types of hyper-classes. FIG. 1A shows an exemplary hyper-class Augmented Deep CNN, while FIG. 1B shows an exemplary hyper-class Augmented and Regularized Deep CNN. The system provides a principled approach to explicitly tackle the challenges of learning a deep CNN for FGIC. Our system provides a task-specific data augmentation approach to address the data scarcity issue. We augment the data of fine-grained image recognition with readily available data annotated by some hyper-classes, which are inherent attributes of fine-grained data. We use two common types of hyper-classes with one being the super-classes that subsume a set of fine-grained classes and another being named factor-classes (e.g., different view-points of a car) that explain the large intra-class variance. Then we formulate the problem into multi-task deep learning, allowing the two tasks (fine-grained classification and hyper-class classification) to share and learn the same feature layers. A regularization technique in the multi-task deep learning exploits the relationship between the fine-grained classes and the hyper-classes, which provides explicit guidance on the learning process at the classifier level. When exploiting factor-classes that explains the intra-class variance, the disclosed learning model engine is able to mitigate the issue of large intra-class variance and improve the generalization performance. We name our new framework as hyper-class augmented and regularized deep learning.

In the Hyper-class Augmented and Regularized Deep Learning system of FIGS. 1A-1B, the first challenge for FGIC is that fine-grained labels are expensive to obtain, requiring intensive labor and domain expertise. Therefore the labeled training is usually not big enough to train a deep CNN without overfilling. The second challenge is large-intra class variance vs small inter-class variance. To address the first challenge, we use a data augmentation method. The idea is to augment the fine-grained data with a large number of auxiliary images labeled by some hyper-classes, which are inherent attributes of fine-grained data and can be much more easily annotated. To address the second challenge, we use a deep CNN model engine utilizing the augmented data.

Hyper-class Data Augmentation is discussed next. Existing data augmentation approaches in visual recognition are mostly based on translations (cropping multiple batches), reflections and adding random noise to the images. However, their improvement for fine-grained image classification is limited because patches from different fine-grained classes could be more similar to each other, consequentially causing more difficulties in discriminating them. We disclose a novel data augmentation approach to address the issue of limited number of labeled fine-grained images. Our approach is inspired by the fact that images have other inherent 'attributes' besides the fine-grained classes, which can be annotated with much less effort than fine-grained classes, and therefore a large number of images annotated by these inherent attributes can be easily acquired. We will refer to these easily annotated inherent attributes as hyper-classes.

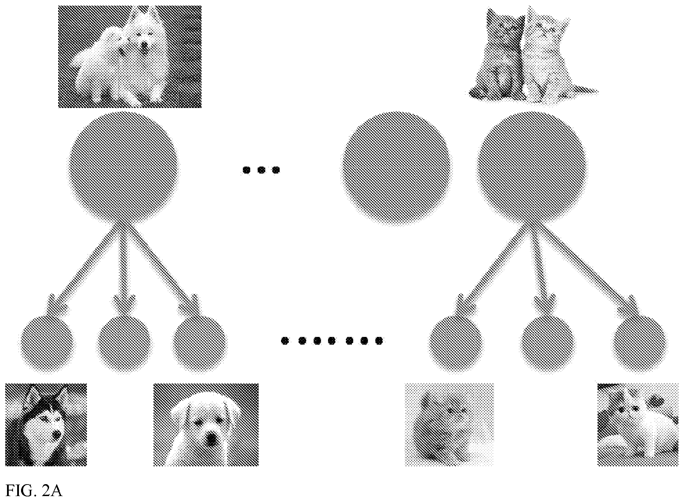

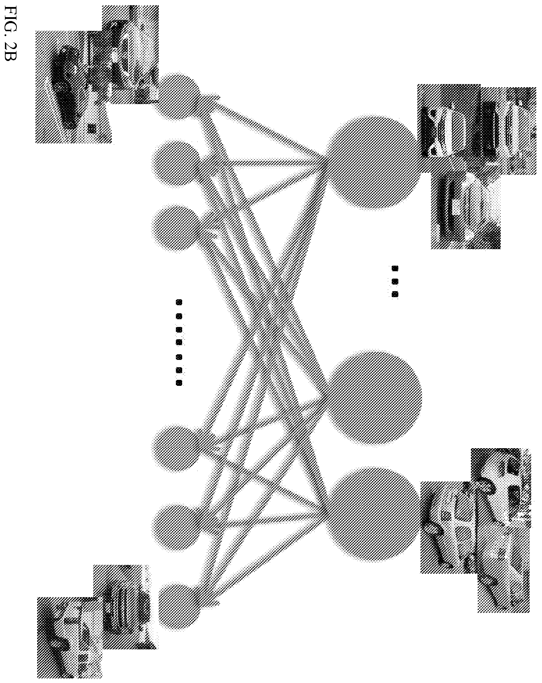

FIG. 2A-2B shows two types of relationships between hyper-classes (FIG. 2A) and fine-grained classes (FIG. 2B). The most common hyper-class is super-class, which subsumes a set of fine-grained classes. For example, a fine-grained dog or cat image can be easily identified by a dog or cat. We can acquire a large number of dog and cat images by fast human labeling or from external sources such as image search engines. Different from conventional approaches that restrict learning to the given training data (either assuming the class hierarchy is known or inferring the class hierarchy from the data), our approach is based on data augmentation which enables us to utilize as many auxiliary images as possible to improve the generalization performance of the learned features.

Besides the super-class that captures 'a kind of relationship, we also consider another important hyper-class to capture 'has a' relationship and to explain the intra-class variances (e.g., the pose variance). In the following discussion, we focus on fine-grained car recognition. A fine-grained car image annotated by make, model and year could be photographed from different views, yielding that images from the same fine-grained class look visually very different. For a particular fine-grained class, images could have different views (i.e., hyper-classes) varying from front, front side, side, back side to back. This is completely different from the class hierarchy between a super-class and fine-grained classes because a class of car may not belong to a single view. The hyper-classes corresponding to different views can also be regarded as different factors of individual fine-grained classes. From a generative perspective, the fine-grained class of a car image can be generated by first generating its view (hyper-class) and then generating the fine-grained class given the view. This is also the probabilistic foundation of our model engine described in next subsection. Since the hyper-class can be considered as a hidden factor of an image, therefore we refer to this type of hyper-class as factor-class. The key difference between super-class and factor-class is that a super-class is implicitly implied by the fine-grained class while the factor-class is unknown for a given fine-grained class. Another example of factor-classes is different expressions (happy, angry, smile, and etc) of a human face. Although intra-class variance has been studied previously, to the best of our knowledge, this is the first work that explicitly models the intra-class variance to improve the performance of deep CNN.

Next, we use fine-grained car recognition as an example to discuss how to obtain a large number of auxiliary images annotated by different views. We use an effective and efficient approach by exploiting the recent advances of online image search engines. Modern image search engines have the capability to retrieve visually similar images to a given query image. For example, Google and Baidu can find visually similar images as the query image. We found that images retrieved by Baidu are more suitable for view prediction, while Google image search tries to recognize the car and return images with the same type of car. In our experiments, we use images retrieved from Baidu as our augmented data.

Next, the Hyper-class Regularized Learning Model engine is discussed. Before describing the details of our model engine, we first introduce some notations and terms used throughout the paper. Let $D_t = \{(\mathbf{x}_1^t, y_1^t), \ldots, (\mathbf{x}_n^t, y_n^t)\}$ be a set of training fine-grained images with $y_i^t \in \{1, \ldots, C\}$ indicating the fine-grained class label (e.g., make, model and year of a car) of image $\mathbf{x}_i^t$, and let $D_a = \{(\mathbf{x}_1^a, v_1^a), \ldots, (\mathbf{x}_m^a, v_m^a)\}$ be a set of

auxiliary images, where $v_i^a \in \{1, \ldots, K\}$ indicates the hyper-class label of image $\mathbf{x}_i^a$ (e.g., view-point of a car). If v denotes a super-class, then we let $v_c$ be the super-class of the fine-grained class c. In the sequel, the two terms 'classifier' and "recognition model' / 'model engine' are used interchangeably.

The goal is to learn a recognition model engine that can predict the fine-grained class label of an image. In particular, we aim to learn a prediction function given by Prey I x), i.e., given the input image how likely it belongs to different fine-grained classes. Similarly, we let Pr(v I x) denote the hyper-class classification model engine. Given the fine-grained training images and the auxiliary hyper-classes labeled images, a straightforward strategy is to train a multi-task deep CNN, by sharing common features and learning classifiers separately. Multi-task deep learning has been observed to improve the performance of individual tasks . To further improve this simple strategy, we disclose a novel multi-task regularized learning framework by exploiting regularization between the fine-grained classifier and the hyper-class classifier. We begin with the description of the model engine regularized by factor-class.

Factor-class regularized learning is discussed next. As a factor-class can be considered as a hidden variable for generating the fine-grained class, therefore we model Pr(y I x) by

$$\Pr(y \mid \mathbf{x}) = \sum_{v=1}^{K} \Pr(y \mid v, \mathbf{x}) \Pr(v \mid \mathbf{x}) \tag{1}$$

where Pr(v I x) is the probability of any factor-class v and Pr($y|v$,**x**) specifies the probability of any fine-grained class given the factor-class and the input image x. If we let h(x) denote the high level features of x, we model the probability Pr(v I x) by a softmax function

$$\Pr(v \mid \mathbf{x}) = \frac{\exp(\mathbf{u}_v^{\mathrm{T}} \mathbf{h}(\mathbf{x}))}{\sum_{v'=1}^{K} \exp(\mathbf{u}_{v'}^{\mathrm{T}} \mathbf{h}(\mathbf{x}))} \tag{2}$$

where $\{\mathbf{u}_v\}$ denote the weights for the hyper-class classification model engine. Note that in all formulations we ignore the bias term since it is irrelevant to our discussion. Nevertheless it should be included in practice. Given the factor-class v and the high level features h of x, the probability Pr(y I v, x) is computed by

$$\Pr(y = c \mid v, \mathbf{x}) = \frac{\exp(\mathbf{w}_{v,c}^{\mathrm{T}} \mathbf{h}(\mathbf{x}))}{\sum_{c=1}^{C} \exp(\mathbf{w}_{v,c}^{\mathrm{T}} \mathbf{h}(\mathbf{x}))} \tag{3}$$

where $\{\mathbf{w}_{v,c}\}$ denote the weights of factor-specific fine-grained recognition model engine. Putting together (2) and (3), we have the following predictive probability for a specific fine-grained class, and we use this equation to make the final predictions

$$\Pr(y = c \mid \mathbf{x}) = \sum_{v=1}^{K} \frac{\exp(\mathbf{w}_{v,c}^{\mathrm{T}} \mathbf{h}(\mathbf{x}))}{\sum_{c=1}^{C} \exp(\mathbf{w}_{v,c}^{\mathrm{T}} \mathbf{h}(\mathbf{x}))} \frac{\exp(\mathbf{u}_v^{\mathrm{T}} \mathbf{h}(\mathbf{x}))}{\sum_{v'=1}^{K} \exp(\mathbf{u}_{v'}^{\mathrm{T}} \mathbf{h}(\mathbf{x}))} \tag{4}$$

Although our model engine has its root in mixture models, however, it is worth noting that unlike most previous mixture models that treat Pr(v I x) as free parameters, we formulate it as a discriminative model. It is the hyper-class augmented images that allow us to learn $\{\mathbf{u}_v\}$ accurately. Then we can write down the negative log-likelihood of data in $D_t$ for fine-grained recognition and that of data in $D_a$ for hyper-class recognition, i.e.,

$$L(\{\mathbf{w}_{v,c}\}, \quad \{\mathbf{u}_v\}) = -\log\text{Pr}(\mathbf{D})$$

$$= \quad -\sum_{i=1}^{n}\sum_{c=1}^{C}\delta(y_i^t,c)\log\text{Pr}(y=c\mid\mathbf{x}_i^t) \qquad (5)$$

$$-\sum_{i=1}^{m}\sum_{v=1}^{K}\delta(v_i^a,v)\log\text{Pr}(v\mid\mathbf{x}_i^a)$$

To motivate the non-trivial regularization, we note that factor-specific weights $\mathbf{w}_{v,c}$ should capture similar high-level factor-related features as the corresponding factor-class classifier $\mathbf{u}_v$. To this end, we introduce the following regularization between $\{\mathbf{w}_{v,c}\}$ and $\{\mathbf{u}_v\}$,

$$R(\{\mathbf{w}_{v,c}\},\{\mathbf{u}_v\}) = \frac{\beta}{2}\sum_{v=1}^{K}\sum_{c=1}^{C}\text{P}\mathbf{w}_{v,c}-\mathbf{u}_v\text{P}_2^2 \qquad (6)$$

The above regularization can be interpreted by imposing a normal prior on $\mathbf{w}_{v,c}$ by

$$\text{Pr}(\mathbf{w}_{v,c}\mid\mathbf{u}_v) \propto \exp\left(-\frac{\beta}{2}\text{P}\mathbf{w}_{v,c}-\mathbf{u}_v\text{P}_2^2\right)$$

The regularization in (6) enjoys another interesting intuition of sharing weights among the factor-class recognition model and the fine-grained recognition model. To see this, we introduce $\mathbf{w}'_{v,c} = \mathbf{w}_{v,c} - \mathbf{u}_v$ and write the regularizer in (6) as

$$R(\{\mathbf{w}'_{v,c}\}) = \frac{\beta}{2}\sum_{v=1}^{K}\sum_{c=1}^{C}\text{P}\mathbf{w}'_{v,c}\text{P}_2^2$$

and $\text{Pr}(y=c\mid\mathbf{x})$ is computed by

$$\text{Pr}(y=c\mid\mathbf{x}) = \sum_{v=1}^{K}\frac{\exp((\mathbf{w}'_{v,c}+\mathbf{u}_v)^{\text{T}}\mathbf{h}(\mathbf{x}))}{\sum_{c=1}^{C}\exp((\mathbf{w}'_{v,c}+\mathbf{u}_v)^{\text{T}}\mathbf{h}(\mathbf{x}))}\frac{\exp(\mathbf{u}_v^{\text{T}}\mathbf{h}(\mathbf{x}))}{\sum_{v'=1}^{K}\exp(\mathbf{u}_{v'}^{\text{T}}\mathbf{h}(\mathbf{x}))}$$

It can be seen that the fine-grained classifier share the same component $\mathbf{u}_v$ of the factor-class classifier. It therefore connects the disclosed model to weight sharing employed in traditional shallow multi-task learning.
Turning now to super-class regularized learning, the difference for super-class regularized deep learning is on $\text{Pr}(y|v,\mathbf{x})$, which can be simply modeled by

$$\text{Pr}(y=c\mid v_c,\mathbf{x}) = \frac{\exp(\mathbf{w}_{v_c,c}^{\text{T}}\mathbf{h}(\mathbf{x}))}{\sum_{c=1}^{C}\exp(\mathbf{w}_{v_c,c}^{\text{T}}\mathbf{h}(\mathbf{x}))}$$

since the super-class $v_c$ is implicitly indicated by the fine-grained label c. The regularization then becomes

$$R(\{\mathbf{w}_{v_c,c}\},\{\mathbf{u}_v\}) = \frac{\beta}{2}\sum_{c=1}^{C}\text{P}\mathbf{w}_{v_c,c}-\mathbf{u}_{v_c}\text{P}_2^2 \qquad (7)$$

It is notable that a similar regularization has been exploited in . However, there is a big difference between our work and in that the weight $\mathbf{u}_v$ for the super-class classification is also learned discriminatively in our model engine from hyper-class augmented images.

A Unified Deep CNN can be done. Using the hyper-class augmented data and the multi-task regularization learning technique, we reach to a unified deep CNN framework as depicted in FIG. 1B. We also exhibit the optimization problem:

$$\min_{\{\mathbf{w}_{v,c}\},\{\mathbf{u}_v\},\{\mathbf{w}_l\}} L(\{\mathbf{w}_{v,c}\},\{\mathbf{u}_v\}) + R(\{\mathbf{w}_{v,c}\},\{\mathbf{u}_v\})$$

$$+ \sum_{v=1}^{K} r(\mathbf{u}_v) + \sum_{l=1}^{H} r(\mathbf{w}_l)$$

where $\mathbf{w}_l$, $l = 1,..., H$ denote all the weights of the CNN in determining the high level features $h(\mathbf{x})$, $H$ denotes the number of layers before the classifier layers, and r(w) denotes the standard Euclidean norm square regularizer with an implicit regularization parameter (or a weight decay parameter).

The disclosed deep learning model engine is trained by back-propagation using mini-batch stochastic gradient descent with settings similar to that in . A key difference is that we have two sources of data and two loss functions corresponding to the two tasks. It is very important to sample both images in $D_t$ and images in $D_a$ in a mini-batch to compute the stochastic gradients. Using the alternative approach that trains the two tasks alternatively could yield very bad solutions. It is because that the two tasks may have different local optimum in different directions and the solution can be easily trapped into a bad local optimum.

In sum, the hyper-class augmented and regularized deep learning framework for FGIC uses a new data augmentation approach by identifying inherent and easily annotated hyper-classes in the fine-grained data and collecting a large amount of similar images labeled by hyper-classes. Our system is the first exploiting attribute based learning and information sharing in a unified deep learning framework. Though current formulations can only use one attribute, it can be modified to handle multiple attributes by adding more tasks and using pair-wise weight regularization. The hyper-class augmented data can generalize the feature learning by incorporating multi-task learning into a deep CNN. To further improve the generalization performance and deal with large intra-class variance, we have disclosed a novel regularization technique that exploits the relationship between the fine-grained classes and hyper-classes. The success of the disclosed framework has been tested on both publicly available small-scale fine-grained datasets and self-collected big car data. We anticipate that one could consider multi-task deep learning by considering regularization between different tasks.

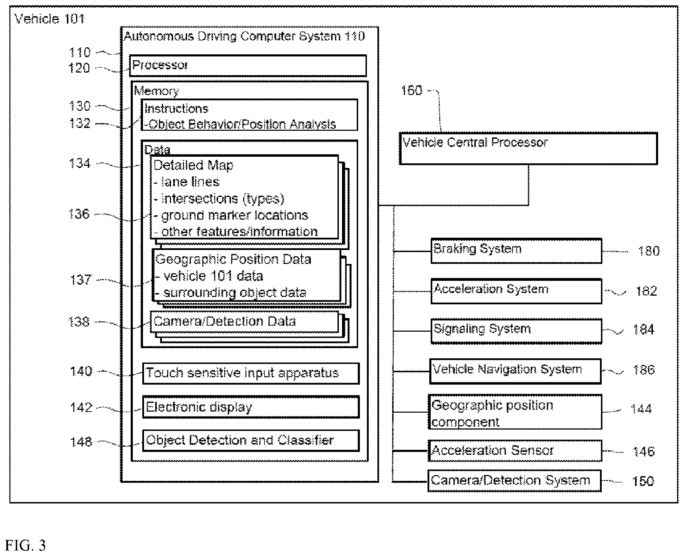

As shown in FIG. 3, an autonomous driving system 100 in accordance with one aspect includes a vehicle 101 with various components. While certain aspects are particularly useful in connection with specific types of vehicles, the vehicle may be any type of vehicle including, but not limited to, cars, trucks, motorcycles, busses, boats, airplanes, helicopters, lawnmowers, recreational vehicles, amusement park vehicles, construction vehicles, farm equipment, trams, golf carts, trains, and trolleys. The vehicle may have one or more computers, such as computer 110 containing a processor 120, memory 130 and other components typically present in general purpose computers.

The memory 130 stores information accessible by processor 120, including instructions 132 and data 134 that may be executed or otherwise used by the processor 120. The memory 130 may be of any type capable of storing information accessible by the processor, including a computer-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 132 may be any set of instructions to be executed directly (such as machine code) or indirectly (such as scripts) by the processor. For example, the instructions may be stored as computer code on the computer-readable medium. In that regard, the terms "instructions" and "programs" may be used interchangeably herein. The instructions may be stored in object code format for direct processing by the processor, or in any other computer language including scripts or collections of independent source code modules that are interpreted on demand or compiled in advance. Functions, methods and routines of the instructions are explained in more detail below.

The data 134 may be retrieved, stored or modified by processor 120 in accordance with the instructions 132. For instance, although the system and method is not limited by any particular data structure, the data may be stored in computer registers, in a relational database as a table having a plurality of different fields and records, XML documents or flat files. The data may also be formatted in any computer-readable format. By further way of example only, image data may be stored as bitmaps comprised of grids of pixels that are stored in accordance with formats that are compressed or uncompressed, lossless (e.g., BMP) or lossy (e.g., JPEG), and bitmap or vector-based (e.g., SVG), as well as computer instructions for drawing graphics. The data may comprise any information sufficient to identify the relevant information, such as numbers, descriptive text, proprietary codes, references to data stored in other areas of the same memory or different memories (including other network locations) or information that is used by a function to calculate the relevant data.

The processor 120 may be any conventional processor, such as commercial CPUs. Alternatively, the processor may be a dedicated device such as an ASIC. Although FIG. 1 functionally illustrates the processor, memory, and other elements of computer 110 as being within the same block, it will be understood by those of ordinary skill in the art that the processor and memory may actually comprise multiple processors and memories that may or may not be stored within the same physical housing. For example, memory may be a hard drive or other storage media located in a housing different from that of computer 110. Accordingly, references to a processor or computer will be understood to include references to a collection of processors, computers or memories that may or may not operate in parallel. Rather than using a single processor to perform the steps described herein some of the components such as steering components and deceleration components may each have their own processor that only performs calculations related to the component's specific function.

In various aspects described herein, the processor may be located remotely from the vehicle and communicate with the vehicle wirelessly. In other aspects, some of the processes described herein are executed on a processor disposed within the vehicle and others by a remote processor, including taking the steps necessary to execute a single maneuver.

Computer 110 may include all of the components normally used in connection with a computer such as a central processing unit (CPU), memory (e.g., RAM and internal hard drives) storing data 134 and instructions such as a web browser, an electronic display 142 (e.g., a monitor having a screen, a small LCD touch-screen or any other electrical device that is operable to display information), user input (e.g., a mouse, keyboard, touch screen and/or microphone), as well as various sensors (e.g. a video camera) for gathering the explicit (e.g., a gesture) or implicit (e.g., "the person is asleep") information about the states and desires of a person.

The vehicle may also include a geographic position component 144 in communication with computer 110 for determining the geographic location of the device. For example, the position component may include a GPS receiver to determine the device's latitude, longitude and/or altitude position. Other location systems such as laser-based localization systems, inertia-aided GPS, or camera-based localization may also be used to identify the location of the vehicle. The vehicle may also receive location information from various sources and combine this information using various filters to identify a "best" estimate of the vehicle's location. For example, the vehicle may identify a number of location estimates including a map location, a GPS location, and an estimation of the vehicle's current location based on its change over time from a previous location. This information may be combined together to identify a highly accurate estimate of the vehicle's location. The "location" of the vehicle as discussed herein may include an absolute geographical location, such as latitude, longitude, and altitude as well as relative location information, such as location relative to other cars in the vicinity which can often be determined with less noise than absolute geographical location.

The device may also include other features in communication with computer 110, such as an accelerometer, gyroscope or another direction/speed detection device 146 to determine the direction and speed of the vehicle or changes thereto. By way of example only, device 146 may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the user, computer 110, other computers and combinations of the foregoing.

The computer may control the direction and speed of the vehicle by controlling various components. By way of example, if the vehicle is operating in a completely autonomous mode, computer 110 may cause the vehicle to accelerate (e.g., by increasing fuel or other energy provided to the engine), decelerate (e.g., by decreasing the fuel supplied to the engine or by applying brakes) and change direction (e.g., by turning the front wheels).

The vehicle may include components 148 for detecting objects external to the vehicle such as other vehicles, obstacles in the roadway, traffic signals, signs, trees, etc. The detection system may include lasers, sonar, radar, cameras or any other detection devices. For example, if the vehicle is a small passenger car, the car may include a laser mounted on the roof or other convenient location. In one aspect, the laser may measure the distance between the vehicle and the object surfaces facing the vehicle by spinning on its axis and changing its pitch. The laser may also be used to identify lane lines, for example, by distinguishing between the amount of light reflected or absorbed by the dark roadway and light lane lines. The vehicle may also include various radar detection units, such as those used for adaptive cruise control systems. The radar detection units may be located on the front and back of the car as well as on either side of the front bumper. In another example, a variety of cameras may be mounted on the car at distances from one another which are known so that the parallax from the different images may be used to compute the distance to various objects which are captured by one or more cameras, as exemplified by the camera of FIG. 1. These sensors allow the vehicle to understand and potentially respond to its environment in order to maximize safety for passengers as well as objects or people in the environment.

In addition to the sensors described above, the computer may also use input from sensors typical of non-autonomous vehicles. For example, these sensors may include tire pressure sensors, engine temperature sensors, brake heat sensors, brake pad status sensors, tire tread sensors, fuel sensors, oil level and quality sensors, air quality sensors (for detecting temperature, humidity, or particulates in the air), etc.

Many of these sensors provide data that is processed by the computer in real-time; that is, the sensors may continuously update their output to reflect the environment being sensed at or over a range of time, and continuously or as-demanded provide that updated output to the computer so that the computer can determine whether the vehicle's then-current direction or speed should be modified in response to the sensed environment.

These sensors may be used to identify, track and predict the movements of pedestrians, bicycles, other vehicles, or objects in the roadway. For example, the sensors may provide the location and shape information of objects surrounding the vehicle to computer 110, which in turn may identify the object as another vehicle. The object's current movement may be also be determined by the sensor (e.g., the component is a self-contained speed radar detector), or by the computer 110, based on information provided by the sensors (e.g., by comparing changes in the object's position data over time).

The computer may change the vehicle's current path and speed based on the presence of detected objects. For example, the vehicle may automatically slow down if its current speed is 50 mph and it detects, by using its cameras and using optical-character recognition, that it will shortly pass a sign indicating that the speed limit is 35 mph. Similarly, if the computer determines that an object is obstructing the intended path of the vehicle, it may maneuver the vehicle around the obstruction.

The vehicle's computer system may predict a detected object's expected movement. The computer system 110 may simply predict the object's future movement based solely on the object's instant direction, acceleration/deceleration and velocity, e.g., that the object's current direction and movement will continue.

Once an object is detected, the system may determine the type of the object, for example, a traffic cone, person, car, truck or bicycle, and use this information to predict the object's future behavior. For example, the vehicle may determine an object's type based on one or more of the shape of the object as determined by a laser, the size and speed of the object based on radar, or by pattern matching based on camera images. Objects may also be identified by using an object classifier which may consider one or more of the size of an object (bicycles are larger than a breadbox and smaller than a car), the speed of the object (bicycles do not tend to go faster than 40 miles per hour or slower than 0.1 miles per hour), the heat coming from the bicycle (bicycles tend to have a rider that emits body heat), etc.

In some examples, objects identified by the vehicle may not actually require the vehicle to alter its course. For example, during a sandstorm, the vehicle may detect the sand as one or more objects, but need not alter its trajectory, though it may slow or stop itself for safety reasons.

In another example, the scene external to the vehicle need not be segmented from input of the various sensors, nor do objects need to be classified for the vehicle to take a responsive action. Rather, the vehicle may take one or more actions based on the color and/or shape of an object.

The system may also rely on information that is independent of the detected object's movement to predict the object's next action. By way of example, if the vehicle determines that another object is a bicycle that is beginning to ascend a steep hill in front of the vehicle, the computer may predict that the bicycle will soon slow down-and will slow the vehicle down accordingly-regardless of whether the bicycle is currently traveling at a relatively high speed.

It will be understood that the foregoing methods of identifying, classifying, and reacting to objects external to the vehicle may be used alone or in any combination in order to increase the likelihood of avoiding a collision.

By way of further example, the system may determine that an object near the vehicle is another car in a turn-only lane (e.g., by analyzing image data that captures the other car, the lane the other car is in, and a painted left-turn arrow in the lane). In that regard, the system may predict that the other car may turn at the next intersection.

The computer may cause the vehicle to take particular actions in response to the predicted actions of the surrounding objects. For example, if the computer 110 determines that another car approaching the vehicle is turning, for example based on the car's turn signal or in which lane the car is, at the next intersection as noted above, the computer may slow the vehicle down as it approaches the intersection. In this regard, the predicted behavior of other objects is based not only on the type of object and its current trajectory, but also based on some likelihood that the object may or may not obey traffic rules or pre-determined behaviors. This may allow the vehicle not only to respond to legal and predictable behaviors, but also correct for unexpected behaviors by other drivers, such as illegal u-turns or lane changes, running red lights, etc.

In another example, the system may include a library of rules about object performance in various situations. For example, a car in a left-most lane that has a left-turn arrow mounted on the light will very likely turn left when the arrow turns green. The library may be built manually, or by the vehicle's observation of other vehicles (autonomous or not) on the roadway. The library may begin as a human-built set of rules which may be improved by vehicle observations. Similarly, the library may begin as rules learned from vehicle observation and have humans examine the rules and improve them manually. This observation and learning may be accomplished by, for example, tools and techniques of machine learning.

In addition to processing data provided by the various sensors, the computer may rely on environmental data that was obtained at a previous point in time and is expected to persist regardless of the vehicle's presence in the environment. For example, data 134 may include detailed map information 136, for example, highly detailed maps identifying the shape and elevation of roadways, lane lines, intersections, crosswalks, speed limits, traffic signals, buildings, signs, real time traffic information, or other such objects and information. Each of these objects such as lane lines or intersections may be associated with a geographic location which is highly accurate, for example, to 15 cm or even 1 cm. The map information may also include, for example, explicit speed limit information associated with various roadway segments. The speed limit data may be entered manually or scanned from previously taken images of a speed limit sign using, for example, optical-character recognition. The map information may include three-dimensional terrain maps incorporating one or more of objects listed above. For example, the vehicle may determine that another car is expected to turn based on real-time data (e.g., using its sensors to determine the current GPS position of another car) and other data (e.g., comparing the GPS position with previously-stored lane-specific map data to determine whether the other car is within a turn lane).

In another example, the vehicle may use the map information to supplement the sensor data in order to better identify the location, attributes, and state of the roadway. For example, if the lane lines of the roadway have disappeared through wear, the vehicle may anticipate the location of the lane lines based on the map information rather than relying only on the sensor data.

The vehicle sensors may also be used to collect and supplement map information. For example, the driver may drive the vehicle in a non-autonomous mode in order to detect and store various types of map information, such as the location of roadways, lane lines, intersections, traffic signals, etc. Later, the vehicle may use the stored information to maneuver the vehicle. In another example, if the vehicle detects or observes environmental changes, such as a bridge moving a few centimeters over time, a new traffic pattern at an intersection, or if the roadway has been paved and the lane lines have moved, this information may not only be detected by the vehicle and used to make various determination about how to maneuver the vehicle to avoid a collision, but may also be incorporated into the vehicle's map information. In some examples, the driver may optionally select to report the changed information to a central map database to be used by other autonomous vehicles by transmitting wirelessly to a remote server. In response, the server may update the database and make any changes available to other autonomous vehicles, for example, by transmitting the information automatically or by making available downloadable updates. Thus, environmental changes may be updated to a large number of vehicles from the remote server.

In another example, autonomous vehicles may be equipped with cameras for capturing street level images of roadways or objects along roadways.

Computer 110 may also control status indicators 138, in order to convey the status of the vehicle and its components to a passenger of vehicle 101. For example, vehicle 101 may be equipped with a display 225, as shown in FIG. 2, for displaying information relating to the overall status of the vehicle, particular sensors, or computer 110 in particular. The display 225 may include computer generated images of the vehicle's surroundings including, for example, the status of the computer, the vehicle itself, roadways, intersections, as well as other objects and information.

Computer 110 may use visual or audible cues to indicate whether computer 110 is obtaining valid data from the various sensors, whether the computer is partially or completely controlling the direction or speed of the car or both, whether there are any errors, etc. Vehicle 101 may also include a status indicating apparatus, such as status bar 230, to indicate the current status of vehicle 101. In the example of FIG. 2, status bar 230 displays "D" and "2 mph" indicating that the vehicle is presently in drive mode and is moving at 2 miles per hour. In that regard, the vehicle may display text on an electronic display, illuminate portions of vehicle 101, or provide various other types of indications. In addition, the computer may also have external indicators which indicate whether, at the moment, a human or an automated system is in control of the vehicle, that are readable by humans, other computers, or both.

In one example, computer 110 may be an autonomous driving computing system capable of communicating with various components of the vehicle. For example, computer 110 may be in communication with the vehicle's conventional central processor 160, and may send and receive information from the various systems of vehicle 101, for example the braking 180, acceleration 182, signaling 184, and navigation 186 systems in order to control the movement, speed, etc. of vehicle 101. In addition, when engaged, computer 110 may control some or all of these functions of vehicle 101 and thus be fully or merely partially autonomous. It will be understood that although various systems and computer 110 are shown within vehicle 101, these elements may be external to vehicle 101 or physically separated by large distances.

Systems and methods according to aspects of the disclosure are not limited to detecting any particular type of objects or observing any specific type of vehicle operations or environmental conditions, nor limited to any particular machine learning process, but may be used for deriving and learning any driving pattern with any unique signature to be differentiated from other driving patterns.

The sample values, types and configurations of data described and shown in the figures are for the purposes of illustration only. In that regard, systems and methods in accordance with aspects of the disclosure may include various types of sensors, communication devices, user interfaces, vehicle control systems, data values, data types and configurations. The systems and methods may be provided and received at different times (e.g., via different servers or databases) and by different entities (e.g., some values may be pre-suggested or provided from different sources).

## Claims

1. A computer-implemented method of training a multi-task deep convolutional neural network, CNN for a multi-task deep learning of fine-grained classification and hyper-class classification, the CNN comprising low-level feature layers, configured to receive an input image, and high-level feature layers, and subsequent classifier layers, the method comprising:

supplementing fine-grained training images, which are labeled by fine-grained classes, with auxiliary images labeled by two hyper-classes by identifying hyper-classes in the fine-grained training images and acquiring a number of hyper-class-labeled auxiliary images from external sources, the two hyper-classes being a super-class that subsumes a set of fine-grained classes and a factor-class that explains intra-class variance; and performing a multi-task deep learning using the fine-grained training images and the auxiliary images to learn a fine-grained classification model, a factor-class classification mode, and a super-class classification model by exploiting

i) a first regularization between factor-class specific weights $\mathbf{u}_v$ of classifier layers configuring the fine-grained classification model and weights $\mathbf{w}_{v,c}$ of classifier layers configuring the factor-class classification model, and

ii) a second regularization between super-class specific weights $\mathbf{u}_{vc}$ of classifier layers configuring the fine-grained classification model and weights $\mathbf{w}_{vc,c}$ of classifier layers configuring the super-class classification model,

wherein the fine-grained classification model and the factor-class classification model share and learn weights of the preceding low-level and high-level feature layers, and the fine-grained classification model and the super-class classification model share and learn weights of the preceding low level and high-level feature layers,

the first regularization is represented by $\frac{\beta}{2} \sum_{v=1}^{K} \sum_{c=1}^{C} \|\mathbf{w}_{v,c} - \mathbf{u}_v\|_2^2$, and

the second regularization is represented by $\frac{\beta}{2} \sum_{c=1}^{C} \|\mathbf{w}_{vc,c} - \mathbf{u}_{vc}\|_2^2$.

2. The method of claim 1, wherein the external sources include image search engines.

3. The method of claim 1, comprising training the deep CNN by backpropagation, using a mini-batch stochastic gradient descent with two sources of data and two loss functions corresponding to the tasks, further comprising sampling images in a mini-batch to determine stochastic gradients.

## Patentansprüche

1. Computerimplementiertes Verfahren zum Trainieren eines tiefen Convolutional-Neural-Network, CNN, im Multitaskbetrieb zum tiefen Multitask-Lernen einer feinkörnigen Klassifikation und einer Hyperklassen-Klassifikation, wobei das CNN Merkmalsschichten niedriger Ebene umfassen, die konfiguriert sind, um ein eingegebenes Bild zu empfangen, und Merkmalsschichten hoher Ebene und nachfolgende Klassifikatorschichten, wobei das Verfahren folgendes umfasst:

Ergänzen feinkörniger Trainingsbilder, die durch feinkörnige Klassen bezeichnet sind, mit Hilfsbildern, die durch zwei Hyperklassen bezeichnet sind, durch Identifizieren von Hyperklassen in den feinkörnigen Trainingsbildern und Erlangen einer Anzahl von durch Hyperklassen bezeichneten Hilfsbildern aus externen Quellen, wobei die zwei Hyperklassen eine Superklasse, die eine Gruppe von feinkörnigen Klassen einschließt, und eine Faktorklasse, die eine Varianz innerhalb einer Klasse erklärt, sind; und

Durchführen eines tiefen Multitask-Lernens unter Verwendung der feinkörnigen Trainingsbilder und der Hilfsbilder, um ein feinkörniges Klassifikationsmodell, ein Faktorklassen-Klassifikationsmodell und ein Superklassen-Klassifikationsmodell durch Nutzen von folgendem zu lernen:

i) einer ersten Regularisierung zwischen faktorklassenspezifischen Gewichtungen $\mathbf{u}_V$ von Klassifikatorschichten, die das feinkörnige Klassifikationsmodell konfigurieren, und Gewichtungen $\mathbf{w}_{V,c}$ von Klassifikatorschichten, die das Faktorklassen-Klassifikationsmodell konfigurieren, und

ii) einer zweiten Regularisierung zwischen superklassenspezifischen Gewichtungen $\mathbf{u}_{VC}$ von Klassifikatorschichten, die das feinkörnige Klassifikationsmodell konfigurieren, und Gewichtungen $\mathbf{w}_{VC,c}$ von Klassifikatorschichten, die das Superklassen-Klassifikationsmodell konfigurieren,

wobei das feinkörnige Klassifikationsmodell und das Faktorklassen-Klassifikationsmodell Gewichtungen der vorangehenden Merkmalsschichten niedriger Ebene und hoher Ebene teilen und lernen und das feinkörnige Klassifikationsmodell und das Superklassen-Klassifikationsmodell Gewichtungen der vorangehenden Merkmalsschichten niedriger Ebene und hoher Ebene gemeinsam teilen und lernen,

die erste Regularisierung dargestellt wird durch $\frac{\beta}{2}\sum_{v=1}^{K}\sum_{c=1}^{C}\left\|\mathbf{w}_{v,c} - \mathbf{u}_v\right\|_2^2$ , und

die zweite Regularisierung dargestellt wird durch $\frac{\beta}{2}\sum_{c=1}^{C}\left\|\mathbf{w}_{vc,c} - \mathbf{u}_{vc}\right\|_2^2$ .

**2.** Verfahren nach Anspruch 1, wobei die externen Quellen Bildersuchmaschinen enthalten.

**3.** Verfahren nach Anspruch 1, das ein Trainieren des tiefen CNN durch Rückpropagierung bzw. Backpropagierung unter Verwendung eines stochastischen Minibatch-Gradientenabstiegs mit zwei Datenquellen und zwei Verlustfunktionen entsprechend den Aufgaben umfasst und weiterhin ein Abtasten von Bildern in einem Minibatch, um stochastische Gradienten zu bestimmen, umfasst.

## Revendications

**1.** Un procédé mis en oeuvre par ordinateur pour l'apprentissage d'un réseau neuronal convolutif, CNN, profond multitâche pour un apprentissage profond multitâche de classification à grain fin et de classification hyper-classe, le CNN comprenant des couches de fonctionnalités de bas niveau, configurées pour recevoir une image d'entrée, et des couches de fonctionnalités de haut niveau, et couches de classificateur ultérieures, le procédé comprenant :

le fait de compléter des images d'apprentissage à grain fin, qui sont étiquetées par des classes à grain fin, avec des images auxiliaires étiquetées par deux hyper-classes en identifiant des hyper-classes dans les images d'apprentissage à grain fin et en acquérant un certain nombre d'images auxiliaires étiquetées par hyper-classes à partir de sources externes, les deux hyperclasses étant une super-classe qui englobe un ensemble de classes à grain fin et une classe de facteurs qui explique la variance intra-classe ; et

effectuer un apprentissage en profondeur multitâche en utilisant les images d'apprentissage à grain fin et les images auxiliaires pour apprendre un modèle de classification à grain fin, un mode de classification de classes de facteurs et un modèle de classification de super-classes en exploitant

i) une première régularisation entre des pondérations spécifiques de classe de facteurs $\mathbf{u}_V$ de couches de classificateurs configurant le modèle de classification à grain fin et les pondérations $\mathbf{w}_{V,C}$ de couches de classificateurs configurant le modèle de classification de classes de facteurs, et

ii) une deuxième régularisation entre des pondérations spécifiques de super-classe $\mathbf{u}_{VC}$, de couches de classificateurs configurant le modèle de classification à grain fin et les pondérations $\mathbf{w}_{V,C}$ de couches de classificateurs configurant le modèle de classification de super-classe,

le modèle de classification à grain fin et le modèle de classification de classes de facteurs partageant et apprenant des pondérations des couches de fonctionnalités de bas niveau et de haut niveau précédentes, et le modèle de classification à grain fin et le modèle de classification de super-classe partageant et apprenant des pondérations des couches de fonctionnalités de bas niveau et de haut niveau précédentes,

la première régularisation est représentée par $\dfrac{\beta}{2} \sum_{v=1}^{K} \sum_{c=1}^{C} \|\mathbf{w}_{v,c} - \mathbf{u}_v\|_2^2$ , et

la deuxième régularisation est représentée par $\dfrac{\beta}{2} \sum_{c=1}^{C} \|\mathbf{w}_{vc,c} - \mathbf{u}_{vc}\|_2^2$ .

2. Le procédé selon la revendication 1, dans lequel les sources externes incluent des moteurs de recherche d'images.

3. Le procédé selon la revendication 1, comprenant le fait de réaliser l'apprentissage du CNN profond par rétropropagation, en utilisant une descente de gradient stochastique en mini-lot avec deux sources de données et deux fonctions de perte correspondant aux tâches, comprenant en outre le fait d'échantillonner des images dans un mini-lot pour déterminer des gradients stochastiques.

softmax loss on hyper-class data

softmax loss on fine-grained data

inputs

lower level features

high level features

classifiers

100

FIG. 1A

softmax loss on hyper-class data

softmax loss on fine-grained data

inputs

lower level features

high level features

classifiers

200

FIG. 1B

EP 3 218 890 B1

FIG. 2A

FIG. 2B

Vehicle 101

Autonomous Driving Computer System 110

110 —
120 — Processor

Memory

130 — Instructions
132 — - Object Behavior/Position Analysis

Data

134 — Detailed Map
- lane lines
- intersections (types)
136 — - ground marker locations
- other features/information

Geographic Position Data
- vehicle 101 data
137 — - surrounding object data

138 — Camera/Detection Data

140 — Touch sensitive input apparatus

142 — Electronic display

148 — Object Detection and Classifier

160 —

Vehicle Central Processor

Braking System — 180

Acceleration System — 182

Signaling System — 184

Vehicle Navigation System — 186

Geographic position component — 144

Acceleration Sensor — 146

Camera/Detection System — 150

FIG. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PIOTR TETERWAK et al.** *Shared Roots: Regularizing Neural Networks through Multitask Learning,* 29 August 2014

- Heterogeneous Multi-task Learning for Human Pose Estimation with Deep Convolutional Neural Network. **LI SIJIN et al.** IEEE CONFERENCE ON COMPUTER VISION AND PATTERN RECOGNITION WORKSHOPS. IEEE, 23 June 2014, 488-495